# EUROPÄISCHE PATENTANMELDUNG

(11) **EP 1 933 123 A2**
(43) Veröffentlichungstag der Anmeldung: **18.06.2008**
(21) Anmeldenummer: 07123094.0
(22) Anmeldetag: 13.12.2007
(51) Int. Cl.: G01L 5/12

(54) **Verfahren und Vorrichtung zur dynamischen Messung der axialen Deformation einer rotierenden Hohlwelle**

(30) Priorität: 15.12.2006 DE 102006059439
(71) Anmelder: Prüftechnik Dieter Busch AG, 85737 Ismaning (DE)
(72) Erfinder: Becker, Edwin, 48734, Reken (DE)

(57) **Zusammenfassung**

Die Erfindung betrifft ein Verfahren zur dynamischen Messung der axialen Deformation einer rotierenden Hohlwelle (10), wobei ein Glasfaserabschnitt (16) eines faseroptischen Sensors (18) an einem Abschnitt einer Innenwand der Hohlwelle (10) in axialer Ausrichtung fest angebracht wird, ein von einer Lichtquelle (24) erzeugtes Lichtsignal in den Glasfaserabschnitt (16) eingekoppelt wird, und das Lichtsignal nach Durchlaufen des Glasfaserabschnitts (16) von einem Detektor (28) erfasst wird, wobei aus der Veränderung mindestens eines Parameters des Lichtsignals, die dieser Parameter erfährt, wenn das Lichtsignal den Glasfaserabschnitt (16) durchläuft, die axiale Deformation des Glasfaserabschnitts (16) ermittelt wird, um die entsprechende axiale Deformation des Abschnitts der Innenwand der Hohlwelle (10) zu ermitteln.

## Beschreibung

Die vorliegenden Erfindung betrifft ein Verfahren und eine Vorrichtung zur dynamischen

Messung der axialen Deformation einer rotierenden Hohlwelle.

Das Messen des auf eine Antriebswelle wirkenden Schubs, d.h. der in axialer Richtung auf die

Welle wirkenden Kräfte, ist insbesondere bei Schiffsantrieben von Interesse, um insbesondere den Propeller zu überwachen. Üblicherweise werden dabei die Kräfte am Drucklager der Welle gemessen. So wird beispielsweise in der GB 2 113 845 A die Verwendung von faseroptischen Dehnungssensoren für die Schubmessung am Wellenlager beschrieben. In ähnlicher Weise wird auch in der US 6,920,801 B2 die Verwendung von optischen Sensoren für die Messung von Axialkräften mittels eines Sensorrings am Wellenlager beschrieben. Auch in der EP 1 007 925 B 1 wird die Verwendung faseroptischer Sensoren zur Schubmessung am Wellenlager erwähnt.

In der DE 196 09 320 A1 wird allgemein die Erfassung der Längenänderung einer Welle mittels optischer Verfahren vorgeschlagen.

In der EP 1 189 015 A1 wird die axiale Deformation einer Welle anhand der optischen Abtastung von auf der Außenseite der Welle angebrachten Markierungen erfasst.

Die US 4,246,780 beschreibt eine direkte Schubmessung mittels auf einer Welle mit einem Band angebrachten Dehnungssensoren mit telemetrischem Abgriff.

Es ist Aufgabe der vorliegenden Erfindung, ein Verfahren zur dynamischen Messung von der axialen Deformation einer rotierenden Hohlwelle zu schaffen, wobei die axiale Deformation auf einfache Weise möglichst genau und zuverlässig erfasst werden soll.

Erfindungsgemäß wird diese Aufgabe durch ein Verfahren gemäß Anspruch 1 sowie eine Vorrichtung gemäß Anspruch 14 gelöst.

Bei der erfindungsgemäßen Lösung ist vorteilhaft, dass dadurch, dass ein Glasfaserabschnitt eines faseroptischen Sensors an einer Innenwand der Hohlwelle in axialer Ausrichtung fest angebracht wird, die axiale Deformation dieses Abschnitts der Hohlwelle auf zuverlässige Weise erfasst werden kann, wobei eine Messung direkt an der Welle stattfindet, was wesentlich zuverlässigere Daten liefert als eine Messung beispielsweise am Drucklager der Welle. Insbesondere kann mittels des faseroptischen Sensors die axiale Deformation eines längeren Abschnitts der Hohlwelle direkt ermittelt werden, während beispielsweise mit

Dehnungsmessstreifen nur punktuelle Messungen möglich sind, was bei der Vermessung eines längeren Wellenabschnitts zu einem komplizierten Aufbau mit einer Vielzahl von einzelnen anzuschließenden Dehnungsmessstreifen führen würde.

Bevorzugte Ausgestaltungen der Erfindung sind in den abhängigen Ansprüchen angegeben.

Im folgenden wird ein Beispiel der Erfindung anhand der beigefügten Zeichnungen näher erläutert. Dabei zeigen:
- Fig. 1: schematisch einen Längsschnitt durch eine rotierende Hohlwelle eines Schiffsantriebs; welche mit einem faseroptischen Sensor zwecks Durchführen eines erfindungsgemäßen Verfahrens zur dynamischen Messung der axialen Deformation der Welle versehe ist;
- Fig. 2: eine vergrößerte Darstellung des faseroptischen Sensors von Fig. 1;
- Fig. 3a: ein Beispiel für die spektrale Verteilung eines in die Glasfaser des Sensors eingekoppelten Lichtimpulses; und
- Fig. 3b: die spektrale Verteilung des in der Glasfaser reflektierten Pulses.

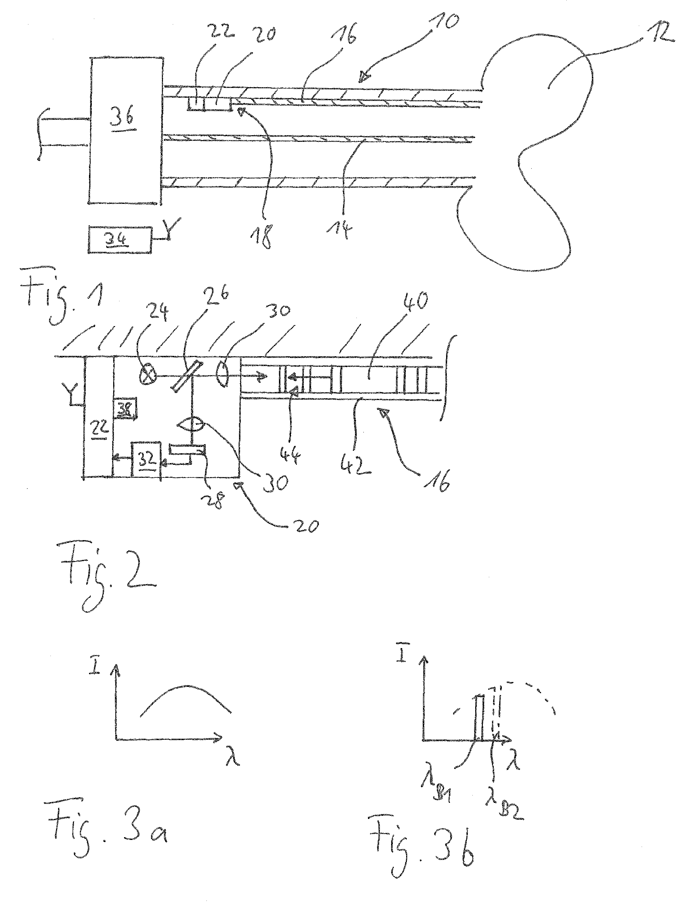

In Fig. 1 ist eine Hohlwelle 10 eines Schiffsantriebs gezeigt, die an ihrem einem Ende einen verstellbaren Propeller 12 trägt und an ihrem anderen Ende mittels einer elastischen Kupplung 36 an einen Schiffsmotor (nicht gezeigt) angeschlossen ist, wobei die elastische Kupplung 36 dazu dient, Drehzahlschwankungen des Schiffsmotors auszugleichen. Die Welle 10 ist als Hohlwelle ausgebildet, wobei im Inneren der Hohlwelle 10 ein Gestänge 14 zum Verstellen des Propellers 12 verläuft.

An der Innenwand der Hohlwelle 10 ist in axialer Ausrichtung ein Glasfaserabschnitt 16 eines faseroptischen Sensors 18 fest angebracht, z.B. durch Ankleben. Der faseroptische Sensor 18 umfasst neben dem Glasfaserabschnitt 16 eine Messeinheit 20 sowie eine Telemetrieeinheit 22. Die Messeinheit 20 weist eine Lichtquelle 24, bei der es sich beispielsweise um eine Laserdiode handelt, einen Strahlteiler 26, einen Detektor 28 sowie Linsen 30 auf, um einerseits ein von der Lichtquelle 24 erzeugtes Lichtsignal in den Glasfaserabschnitt 16 einzukoppeln und andererseits das Lichtsignal nach Durchlaufen des Glasfaserabschnitts 16 mit dem Detektor 28 zu erfassen, wobei aus der Veränderung mindestens eines Parameters des Lichtsignals, die dieser Parameter erfährt, wenn das Lichtsignal den Glasfaserabschnitt 16 durchläuft, die axiale Deformation, d.h. Dehnung bzw. Stauchung, des Glasfaserabschnitts 16 ermittelt wird. Da der Glasfaserabschnitt 16 fest mit der Innenwand der Hohlwelle 10 verbunden ist, kann man daraus Rückschlüsse auf die axiale Deformation der Hohlwelle 10 ziehen. Die Messeinheit 20 weist außerdem noch eine Stromquelle 38 auf.

Im gezeigten Beispiel wird das in dem Glasfaserabschnitt 16 reflektierte Lichtsignal von dem Detektor 28 erfasst. Die entsprechenden Messsignale, die von dem Detektor 28 ausgegeben werden, werden in einer Einheit 32 verstärkt und gefiltert und gelangen anschließend zu der

Telemetrieeinheit 22, mittels welcher sie drahtlos an eine von der Hohlwelle 10 getrennt angeordnete Auswerteeinheit 34 übertragen werden.

Der Glasfaserabschnitt 16 erstreckt sich vorzugsweise im Wesentlichen über den gesamten starren Abschnitt der Hohlwelle 10, der sich von der elastischen Kupplung 36 zu dem Propeller 12 erstreckt. Auf diese Weise kann die Gesamtdeformation der Welle 10 in axialer Richtung und somit der auf die Welle 10 wirkende Schub ermittelt werden. Aus diesen Daten wiederum können Rückschlüsse auf den momentanen Zustand des Propellers 12 gezogen werden. So kann beispielsweise auf diese Weise festgestellt werden, ob momentan am Propeller 12 Kavitationsbildung vorliegt.

Die Messeinheit 20 und die Telemetrieeinheit 22 sind fest an der Innenwand der Hohlwelle 10 angebracht. Typischerweise ist der Glasfaserabschnitt 16 nicht direkt mit der Faser 40 selbst sondern mittels eines die Faser 40 umgebenden Schutzrohrs 42, das typischerweise aus Blech gefertigt ist, an der Innenwand der Hohlwelle 10 befestigt.

Grundsätzlich könnte es sich bei dem ausgewerteten Parameters des Lichtsignals um

Intensität, Phase, Wellenlänge, Polarisation oder Pulslaufzeit handeln.

Vorzugsweise ist der faseroptischen Sensor 18 jedoch als Bragg-Gitter-Sensor ausgebildet, wobei der Glasfaserabschnitt 16 mit mindestens einem, vorzugsweise jedoch mit einer Vielzahl von Bragg-Gittern 44 versehen ist. Die Bragg-Gitter werden hergestellt, indem der Kern der Glasfaser 40 mit einem räumlich variierenden Muster intensive UV-Laserlicht beleuchtet wird, wobei durch die Photonen dieses Lichts die Silizium-Sauerstoff-Bindungen zum Teil aufgebrochen werden, wodurch die Struktur der Faser gestört und der Brechungsindex lokal leicht erhöht wird. Auf diese Weise wird eine dem Mustere entsprechende periodische Variation des Brechungsindex der Faser erzeugt. Das räumlich variierende Muster wiederum kann beispielsweise durch die Interferenz von zwei kohärenten Strahlen oder einer geeigneten Maske erzeugt werden.

Eine auf diese Weise modifizierte Faser dient als Wellenlängen selektiver Spiegel: Ein in die Faser eingekoppeltes Lichtsignal wird an jedem der Brechungsindexänderungen zum Teil reflektiert, wobei diese Reflexionen bei den meisten Wellenlängen destruktiv interferieren und sich das Lichtsignal im Wesentlichen ungestört in der Faser ausbreitet. Jedoch erfolgt in einem engen Wellenlängenbereich eine konstruktive Interferenz, und das Licht wird in der Faser reflektiert. Die maximale Reflektivität findet dabei bei der sogenannten Bragg-Wellenlänge λ_{B} statt, die sich aus dem Produkt der Gitterperiode *d* und dem Zweifachen des effektiven Brechungsindex ergibt.

Folglich wird ein in die Faser eingekoppeltes breitbandiges Lichtsignal (siehe Fig. 3a) von der Glasfaser als schmalbandiges Signal mit im Wesentlichen der Bragg-Wellenlänge λ_{B1} reflektiert (siehe Fig. 3b). Da die Bragg-Wellenlänge von der räumlichen Periode des Gitters 42 abhängt (diese ist in Fig. 2 mit *d* angedeutet) führt eine Dehnung bzw. Stauchung der

Glasfaser 40, die durch eine entsprechende axiale Dehnung bzw. Stauchung der Welle 10 verursacht wird, zu einer entsprechenden Änderung der Gitterperiode *d*, wodurch sich auch die Bragg-Wellenlänge entsprechend ändert, z.B. auf den Wert λ_{B2} (siehe Fig. 3b). Durch spektrale Analyse des reflektierten Lichtsignals kann also die Dehnung bzw. Stauchung der Welle 10 in axialer Richtung erfasst werden.

Eine gleichzeitige Messung in verschiedenen Bereichen entlang der Welle 10 kann dadurch erfolgen, dass eine Vielzahl von Bragg-Gittern 44 vorgesehen wird, die sich durch ihre

Gitterperiode und somit ihre Bragg-Wellenlänge unterscheiden, wobei dann zum Auslesen des Sensors eine Frequenzmultiplexing-Verfahren verwendet werden kann.

Eine Beschreibung von Faser-Bragg-Gittersensoren ist beispielsweise unter http://www.smartfibres.com/Fiber_Bragg_Grating.htm zu finden.

Solche und andere faseroptische Sensoren können sowohl zur Erkennung quasistatischer axialer Deformationen verwendet werden als auch zur Erkennung von Defonnationen, die mit höherer Frequenz angeregt werden. Als quasistatisch gelten hier Deformationen, die bei gleich bleibenden Betriebsbedingungen im Dauerbetrieb vorliegen. Gegenüber der ruhenden, nicht rotierenden Welle wird im konstanten Betrieb durch die Kraftübermittlung vom Motor zum Propeller die Welle in axialer Richtung gestaucht. Diese Stauchung kann mittels eines faseroptischen Sensors gemessen werden. Daraus kann dann auf den tatsächlich geleisteten

Schub rückgeschlossen werden. Die mit höherer Frequenz angeregten Deformationen können zum Beispiel in die Welle übertragene Schwingungen des Schiffsdiesels mit wenigen Hertz, aber auch vielfältige andere Schwingungen wie z.B. Lagergeräusche sein. Sogar die Frequenzen von Kavitationsgeräuschen sind modernen faseroptischen Sensoren zugänglich.

Es versteht sich, dass die in dieser Beschreibung beschriebenen Schiffswellen nur ein Beispiel für erfindungsgemäß mit einem faseroptischen Sensor versehene Hohlwellen sind. In Windkraftgeneratoren z.B. kommen Hohlwellen ähnlicher Bauweise zum Einsatz, bei denen faseroptische Sensoren in entsprechender Weise verwendet werden können. Auch in Fluggeräten verwendete Hohlwellen können in erfindungsgemäßer Weise mit einem faseroptischen Sensor versehen werden.

## Patentansprüche

1. Verfahren zur dynamischen Messung der axialen Deformation einer rotierenden Hohlwelle (10), wobei ein Glasfaserabschnitt (16) eines faseroptischen Sensors (18) an einem Abschnitt einer Innenwand der Hohlwelle (10) in axialer Ausrichtung fest angebracht wird, ein von einer Lichtquelle (24) erzeugtes Lichtsignal in den Glasfaserabschnitt (16) eingekoppelt wird, und das Lichtsignal nach Durchlaufen des Glasfaserabschnitts (16) von einem Detektor (28) erfasst wird, wobei aus der Veränderung mindestens eines Parameters des Lichtsignals, die dieser Parameter erfährt, wenn das Lichtsignal den Glasfaserabschnitt (16) durchläuft, die axiale Deformation des Glasfaserabschnitts (16) ermittelt wird, um die entsprechende axiale Deformation des Abschnitts der Innenwand der Hohlwelle (10) zu ermitteln.

2. Verfahren nach Anspruch 1, **dadurch gekennzeichnet, dass** der Glasfaserabschnitt (16) an der Innenwand der Hohlwelle (10) angeklebt ist.

3. Verfahren nach Anspruch 1 oder 2, **dadurch gekennzeichnet, dass** sich der Glasfaserabschnitt (16) im wesentlichen über die gesamte Länge eines starren Teils der Hohlwelle (10) erstreckt.

4. Verfahren nach einem der vorhergehenden Ansprüche, **dadurch gekennzeichnet, dass** die Lichtquelle (24) und der Detektor (28) an der Hohlwelle (10) fest angebracht sind.

5. Verfahren nach Anspruch 4, **dadurch gekennzeichnet, dass** die Stromversorgung (32) für die Lichtquelle (24) und den Detektor (28) an der Hohlwelle (10) fest angebracht ist.

6. Verfahren nach einem der vorhergehenden Ansprüche, **dadurch gekennzeichnet, dass** eine von der Hohlwelle (10) getrennte Auswerteeinheit (34) vorgesehen ist, wobei das Detektorsignal mittels einer Telemetrieanordnung (22) drahtlos an die Auswerteeinheit (34) übermittelt wird.

7. Verfahren nach einem der vorhergehenden Ansprüche, **dadurch gekennzeichnet, dass** das Lichtsignal in dem Glasfaserabschnitt (16) reflektiert wird, bevor es von dem Detektor (28) erfasst wird.

8. Verfahren nach einem der vorhergehenden Ansprüche, **dadurch gekennzeichnet, dass** es sich bei dem Parameter um eine Intensität, Phase, Wellenlänge, Polarisation oder Pulslaufzeit des Lichtsignals handelt.

9. Verfahren nach einem der vorhergehenden Ansprüche, **dadurch gekennzeichnet, dass** der faseroptische Sensor (18) als Faser-Bragg-Gitter-Sensor ausgebildet ist, wobei der Glasfaserabschnitt (16) mit mindestens einem Bragg-Gitter (44) versehen ist.

10. Verfahren nach einem der vorhergehenden Ansprüche, **dadurch gekennzeichnet, dass** es sich bei der Hohlwelle (10) um die Antriebswelle für einen verstellbaren Schiffspropeller (22) handelt.

11. Verfahren nach Anspruch 10, **dadurch gekennzeichnet, dass** aus der ermittelten axialen Deformation der von der Welle übertragene Schub ermittelt wird.

12. Verfahren nach Anspruch 10 oder 11, **dadurch gekennzeichnet, dass** der zeitliche Verlauf der ermittelten axialen Deformation ausgewertet wird, um in die Welle übertragene Schwingungen des Schiffsmotors, Lagergeräusche, und/oder Kavitationsgeräusche zu erfassen.

13. Verfahren nach einem der Ansprüche 1 bis 9, **dadurch gekennzeichnet, dass** es sich bei der Hohlwelle um die Antriebswelle für einen von einem Propeller angetriebenen Windkraftgenerator handelt.

14. Vorrichtung zur dynamischen Messung der axialen Deformation einer rotierenden Hohlwelle (10), mit einem faseroptischen Sensor (18) mit einem Glasfaserabschnitt (16), der an einem Abschnitt einer Innenwand der Hohlwelle (10) in axialer Ausrichtung fest angebracht ist, einer Anordnung (30) zum Einkoppeln eines von einer Lichtquelle (24) erzeugten Lichtsignal in den Glasfaserabschnitt (16), einem Detektor (28) zum Erfassen des Lichtsignals nach Durchlaufen des Glasfaserabschnitts (16), und einer Auswerteeinheit (34) zum Ermitteln der axialen Deformation des Glasfaserabschnitts (16) aus der Veränderung mindestens eines Parameters des Lichtsignals, die dieser Parameter erfährt, wenn das Lichtsignal den Glasfaserabschnitt (16) durchläuft.
